# EUROPEAN PATENT SPECIFICATION

(11) **EP 0 583 932 B1**
(45) Date of publication and mention of the grant of the patent: **20.05.1998**
(21) Application number: 93306321.6
(22) Date of filing: 10.08.1993
(51) Int. Cl.: C02F 3/26, C02F 3/22, B01D 53/04

(54) **Treatment for liquids**
Behandlung von Flüssigkeiten
Traitement de liquides

(30) Priority: 17.08.1992 GB 9217480; 04.09.1992 GB 9218767
(43) Date of publication of application: 23.02.1994
(73) Proprietor: The BOC Group plc, Windlesham Surrey GU20 6HJ (GB)
(72) Inventor: Garret, Michael Ernest, Woking Surrey (GB); Boon, Arthur Godfrey, Stevenage, Hertfordshire (GB)
(74) Representative: Wickham, Michael

(56) References cited:
- EP-A- 0 262 449
- DE-A- 2 926 441
- GB-A- 2 128 175
- US-A- 3 856 671

## Description

The present invention relates to methods of and apparatus for dissolving a gas in a liquid and more particularly to the treatment of liquid sewage using an oxygen enriched gas.

For the avoidance of doubt, throughout this specification the term 'gas' is intended to embrace gas mixtures.

Methods of treating large volumes of sewage in a treatment tank are known. Such known methods frequently require the pumping of several million gallons of sewage.

In our GB-A-2128175 a part of the sewage flow passing through a main gravity sewer is diverted and oxygenated to prevent bacterial formation of hydrogen sulphide. The diverted sewage is passed into a downward annular leg and thence into an inner upward leg, flow of sewage through the oxygenator being made possible by the introduction of oxygen bubbles into the bottom of the upward leg, which bubbles dissolve as they ascend the upward leg with the sewage flow.

It is an aim of the present invention to provide a relatively simple apparatus suitable for sweetening sewage which avoids the need for pumping the sewage.

According to one aspect of the present invention a method of dissolving a gas in a liquid comprises the steps of:-
a) passing the liquid under and into a gas tight hood;
b) causing the liquid to fall as a stream from under the gas tight hood through a first passageway;
c) passing bubbles of the gas up through the descending liquid stream to dissolve in the liquid stream to form a gas-liquid stream;
d) causing the gas liquid stream to ascend through a second passageway; and
e) passing further bubbles of gas up through the ascending gas-liquid stream to dissolve further gas in the gas-liquid stream and to balance the liquid density in the descending and ascending streams.

Preferably, the gas is an oxygen enriched gas mixture.

Preferably, any undissolved gas which is trapped within the hood is recycled for dissolving again in the liquid/gas-liquid streams by means of a pump.

According to a further aspect of the present invention an apparatus for dissolving a gas in a liquid is characterised by the provision of a first conduit for the passage of the liquid therealong, a portion at least of the first conduit extending under and into a gas tight hood, first and second passageways descending from under the gas tight hood, and means located at or adjacent the bottom ends of the passageways for introducing gas into both the first and second passageways, the arrangement being such that liquid passing along the passageways in succession is contacted by the gas so as to form gas-liquid streams in the passageways of balanced density.

An embodiment of the invention will now be described, by way of example, reference being made to the Figures of the accompanying diagrammatic drawing in which:-
Figure 1 is a schematic cross-section through an apparatus for dissolving gas in a liquid;
Figure 2 is a schematic plan view of the apparatus for Figure 1; and
Figure 3 is a schematic flow diagram illustrating means for associating the apparatus shown in Figures 1 and 2 with a PSA plant for separating oxygen from air.

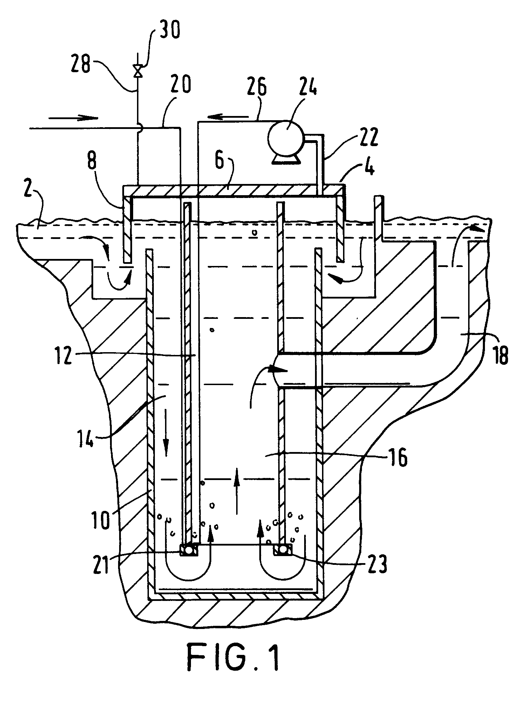

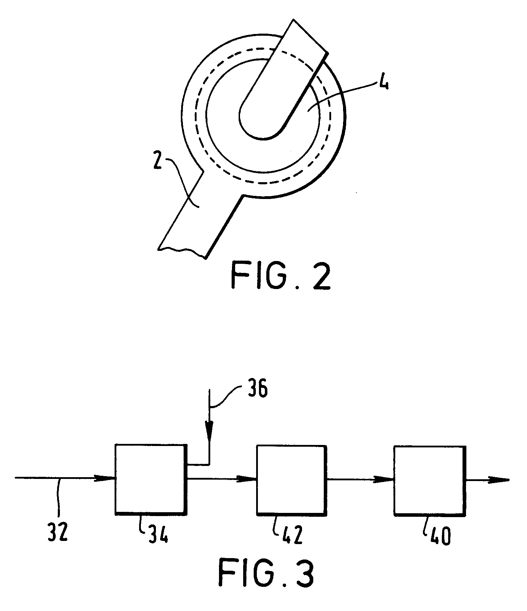

As shown in Figures 1 and 2, an apparatus for dissolving a gas, for example an oxygen rich gas mixture in a liquid such as liquid sewage comprises a first conduit 2 which, as shown most clearly in Figure 2, extends around and under a gas tight hood 4 comprising an upper part 6 from which depends a skirt 8.

Located immediately beneath the hood 4 are two concentric pipes, namely a first outer pipe 10 and spaced therefrom a second inner pipe 12. The inner surface of pipe 10 defines with the outer surface of pipe 12 an annular first passageway 14. As will be explained, the inner surface of pipe 12 defines a second passageway 16. The upper end of pipe 12 extends upwardly beyond the upper end of pipe 10 so that the liquid sewage will first flow downwardly along the first passageway 14.

A second conduit 18 is in fluid communication at one end with the passageway 16 and at its other end with the conduit 2 downstream of the hood 4.

A line 20 extends from a source (not shown) of the oxygen enriched gas mixture to a first outlet 21 located adjacent to the bottom of the passageways 14, 16. A line 22 extends from the underside of hood 4 to the inlet of a pump 24. The outlet from the pump 24 is in fluid communication via a line 26 with a second outlet 23.

A vent line 28 is also in fluid communication with the underside of the hood 4 and is controlled by a valve 30.

In use, sewage flowing along the first conduit 2 flows under the skirt 8 of the hood 4 and hence down the annular passageway 14 between the concentric pipes 10, 12.

The oxygen enriched gas from the source (not shown) is introduced into the downward flowing liquid stream via the outlet 21 by means of the line 20. The bubbles of the oxygen enriched gas rise up against the flow of the liquid stream since the limiting rise velocity of the gas is higher than the downward velocity of the liquid stream.

The gas-liquid stream thus formed on reaching the bottom of the first passageway 14 next flows up the second passageway 16.

Any undissolved oxygen enriched gas is trapped under the hood 4 and is recycled by utilising the pump 24 which draws the trapped gas from the underside of the hood 4 through lines 22, 26 and reintroduces the gas into the gas-liquid stream ascending the passageway 16 via the outlet 23.

The gas introduced/injected into the upward flowing gas-liquid stream from the outlet 23 helps to balance the density of the downward flowing liquid stream to thereby avoid excess pressure drop. The gas-liquid stream then leaves the passageway 16 to rejoin the first conduit 2 downstream of the hood 4 via the second conduit 18.

Gradually the gas under the hood 4 will become enriched in nitrogen and this gas will need to be bled off periodically to avoid pressure build up via the vent 28 and valve 30.

When suitably dimensioned the embodiment of the apparatus described above is capable of treating a flow rate of approximately 200 million gallons of sewage per day. The pipes 10, 12 are so dimensioned that the flow velocity of the sewage down the passageway 14 is preferably no more than 0.2m per second. The oxygen enriched gas mixture introduced via the outlet 21 forms bubbles which rise up against the downward flow of the liquid because the limiting rise velocity of the gas is 0.3m per second. With pipes having a length in the order of 5m this means that the gas bubbles will be in contact with the liquid sewage for a period of 50 seconds. The sewage when ascending upwardly via passageway 16 has its velocity raised to 0.6m per second so that detritus is carried along with the flow.

A particular advantage of the embodiment described is that it is simple to construct and an especially beneficial feature is the fact that by balancing the density of the streams in the descending and ascending passageways the apparatus can be operated with zero pressure drop on the sewage.

An alternative method of operating the apparatus shown in Figures 1 and 2 of the accompanying drawings is to withdraw a stream of oxygen-rich gas from the hood 4, for example, via the vent 28 and valve 30 and to supply as a supplementary feed gas the stream of oxygen-rich gas to a Pressure Swing Adsorption (PSA) plant (not shown in Figures 1 and 2) for separating oxygen from air. The PSA plant may be used as a source of oxygen from which the apparatus shown in Figures 1 and 2 is supplied. By returning oxygen from under the hood 4 to the PSA plant, waste of oxygen is reduced.

There are a number of different stages in a PSA cycle for producing oxygen at which the oxygen-rich gas stream taken from under the hood 4 can be utilised. For example, in a method of producing an oxygen-enriched product stream according to EP-A-0 449 448, the oxygen-rich gas may be introduced into the column A at its feed end during a period of time that extends between the end of step (i) and the start of step (iii), preferably either during a period between the end of step (ii) and the start of step (iii) or simultaneously with step (ii). Typically, while oxygen-rich gas is being fed to the feed end of the column A, a portion of the product stream is introduced into the Product End of the second column B to purge the second column and gas is simultaneously withdrawn from the feed end of the second column B to desorb and evacuate nitrogen-rich gas from the second column B. In addition, the oxygen-rich gas may be introduced into the feed end of the column B during the period extending between the end of step (iv) and the start of step (vi). A procedure may be adopted for introducing the oxygen-rich gas into the feed end of column B analogous to that chosen for introducing oxygen-rich gas into the column A.

If the PSA plant for separating oxygen from air has 3 columns each containing a bed of molecular sieve adsorbent, introduction of the oxygen-rich gas to each bed in turn may similarly be performed between the end of an equalisation step and the start of a step in which feed air is supplied to the bed.

In another alternative, the oxygen-rich gas may be mixed with feed air, typically at an inlet to a compressor used to feed the air to the bed. This technique is particularly useful if the PSA plant adsorbs nitrogen at a pressure above atmospheric and then regenerates the adsorbent by reducing the pressure to atmospheric pressure. Alternatively, in such a 'pressure-atmosphere' cycle a low pressure blower could be used to urge oxygen-rich gas into the bed at a suitable juncture in each cycle, eg immediately before equalisation in a two bed cycle.

Referring now to Figure 3, there is shown an apparatus for treating the oxygen-rich gas upstream of its supply to a PSA plant 40. A pipeline 32 has an inlet that communicates with the vent 28 (not shown in Figure 3). The outlet of the pipeline 32 communicates with a packed contactor 34 in which the oxygen-rich gas is contacted with ozone supplied via a pipeline 36. (If desired, the PSA plant 40 may supply oxygen not only to the apparatus shown in Figures 1 and 2 but also to an ozoniser (not shown) so as to provide the necessary ozone for treatment of the oxygen-rich gas.) Contact with ozone is particularly desirable if the liquid received by the apparatus shown in Figures 1 and 2 is sewage. The ozone acts to clean the oxygen-rich gas. The cleaned oxygen-rich gas leaves the contactor 34 and preferably passes into a conventional ozone destructor unit 42 which is adapted to remove all traces of ozone from the oxygen-rich gas. The oxygen-rich gas then enters the PSA plant 40 and is used therein in a manner as described above. If desired, the PSA plant 40 may have a buffer vessel (not shown) in which the oxygen-rich gas is received and from which it is supplied to the beds of the PSA plant.

## Claims

1. A method of dissolving a gas in a liquid characterised by the steps of:-
a) passing the liquid under and into a gas tight hood;
b) causing the liquid to fall as a stream from under the gas tight hood through a first passageway;
c) passing bubbles of the gas up through the descending liquid stream to dissolve in the liquid stream to form a gas-liquid stream;
d) causing the gas-liquid stream to ascend through a second passageway; and
e) passing further bubbles of gas up through the ascending gas-liquid stream to dissolve further gas in the gas-liquid stream and to balance the liquid density in the descending and ascending streams.

2. A method as claimed in claim 1, further characterised in that the first passageway is defined by the annular space between the inner surface of a first outer pipe and the outer surface of a second inner pipe, and the second passageway is defined by the inner surface of the second inner pipe, the pipes projecting downwardly from the gas tight hood.

3. A method as claimed in claim 1 or 2, further characterised in that any undissolved gas is trapped within the hood.

4. A method as claimed in claim 3, further characterised in that undissolved gas is recycled for dissolving again in the liquid by means of a pump.

5. A method as claimed in any one of claims 1 to 4, further characterised in that the gas is an oxygen enriched gas mixture.

6. A method as claimed in claim 5, in which undissolved oxygen-enriched gas mixture is withdrawn from the hood and oxygen is separated therefrom.

7. Apparatus for dissolving a gas in a liquid characterised by the provision of a first conduit (2) for the passage of the liquid therealong, a portion at least of the first conduit (2) extending under and into a gas tight hood (4), first and second passageways (14, 16) descending from under the gas tight hood, and means (21, 23) located at or adjacent the bottom ends of the passageways (14, 16) for introducing gas into both the first and second passageways (14, 16), the arrangement being such that liquid passing along the passageways in succession is contacted by the gas so as to form gas-liquid streams in the passageways of balanced density.

8. Apparatus as claimed in claim 7, further characterised in that the first passageway (14) is defined by an annular space between the inner surface of a first outer pipe (10) and the outer surface of a second inner pipe (12), the second passageway (16) being defined by the inner surface of the second inner pipe (12), the pipes (10,12) projecting downwardly from under the gas tight hood (4).

9. Apparatus as claimed in claims 7 or 8, further characterised in that a pump (24) is provided for recirculating undissolved gas trapped under the gas tight hood (4).

10. Apparatus as claimed in claims 7, 8 or 9, further characterised in that a vent pipe (22) is provided in fluid communication with the underside of the hood (4).

11. Apparatus as claimed in any one of claims 7 to 10, further characterised in that a second conduit (18) is provided having one end in fluid communication with the second passageway (16) and its other end in fluid communication with the first conduit downstream of the hood (4).

12. Apparatus as claimed in any one of claims 7 to 11, further characterised by the provision of a PSA plant (40) for separating oxygen from air, said PSA plant (40) communicating at its feed end with the interior of the hood (4).

13. Apparatus as claimed in any of Claims 7 to 12 wherein the gas tight hood comprises an upper part (6) from which depends a skirt (8).

## Patentansprüche

1. Verfahren zum Auflösen eines Gases in einer Flüssigkeit, gekennzeichnet durch folgende Schritte:
a) Hindurchleiten der Flüssigkeit unter einer und in eine gasdichte Haube,
b) Leiten der Flüssigkeit derart, daß sie als Strömung aus unter der gasdichten Haube durch einen ersten Kanal abfällt,
c) Hindurchleiten von Blasen des Gases durch die absteigende Flüssigkeitsströmung nach oben, um sie in der Flüssigkeitsströmung aufzulösen und eine Gas-Flüssigkeits-Strömung zu bilden,
d) Leiten der Gas-Flüssigkeits-Strömung so, daß sie durch einen zweiten Kanal aufsteigt, und
e) Hindurchleiten weiterer Gasblasen nach oben durch die aufsteigende Gas-Flüssigkeits-Strömung, um weiteres Gas in der Gas-Flüssigkeits-Strömung aufzulösen und die Flüssigkeitsdichte in der absteigenden Strömung und der aufsteigenden Strömung auszugleichen.

2. Verfahren nach Anspruch 1, weiter dadurch gekennzeichnet, daß der erste Kanal durch einen Ringraum zwischen der Innenwand eines ersten äußeren Rohrs und der Außenwand eines zweiten inneren Rohrs gebildet ist und der zweite Kanal durch die Innenwand des zweiten inneren Rohrs gebildet ist, wobei die Rohre von der gasdichten Haube aus nach unten verlaufen.

3. Verfahren nach Anspruch 1 oder 2, weiter dadurch gekennzeichnet, daß irgendwelches nicht aufgelöstes Gas innerhalb der Haube gefangen wird.

4. Verfahren nach Anspruch 3, weiter dadurch gekennzeichnet, daß nicht aufgelöstes Gas mittels einer Pumpe zur weiteren Auflösung in die Flüssigkeit zurückgeführt wird.

5. Verfahren nach einem der Ansprüche 1 bis 4, weiter dadurch gekennzeichnet, daß das Gas ein mit Sauerstoff angereichertes Gasgemisch ist.

6. Verfahren nach Anspruch 5, wobei nicht aufgelöstes, mit Sauerstoff angereichertes Gasgemisch aus der Haube abgezogen und Sauerstoff davon getrennt wird.

7. Einrichtung zum Auflösen eines Gases in einer Flüssigkeit, gekennzeichnet durch das Vorsehen einer ersten Leitung (2) für das Hindurchführen der Flüssigkeit, wobei ein Teil mindestens der ersten Leitung (2) unter einer und in eine gasdichte Haube (4) verläuft, weiter eines ersten und eines zweiten Kanals (14, 16), der unter der gasdichten Haube nach unten verläuft, und Mitteln (21, 23), die an oder nahe den unteren Enden der Kanäle (14, 16) angeordnet sind, um Gas sowohl in den ersten als auch in dem zweiten Kanal (14, 16) einzuleiten, wobei die Anordnung so getroffen ist, daß entlang der Kanäle strömende Flüssigkeit aufeinanderfolgend mit dem Gas in Berührung gebracht wird, um so Gas-Flüssigkeits-Strömungen in den Kanälen mit ausgeglichener Dichte zu erzeugen.

8. Einrichtung nach Anspruch 7, weiter dadurch gekennzeichnet, daß der erste Kanal (14) durch einen Ringraum zwischen der Innenwand eines ersten äußeren Rohrs (10) und der Außenwand eines zweiten inneren Rohrs (12) gebildet ist und der zweite Kanal (16) durch die Innenwand des zweiten inneren Rohrs (12) gebildet ist, wobei die Rohre (10, 12) von unterhalb der gasdichten Haube (4) nach unten verlaufen.

9. Einrichtung nach Anspruch 7 oder 8, weiter dadurch gekennzeichnet, daß eine Pumpe (24) vorgesehen ist, um unter der gasdichten Haube (4) gefangenes nicht aufgelöstes Gas zurückzuführen.

10. Einrichtung nach einem der Ansprüche 7, 8 oder 9, weiter dadurch gekennzeichnet, daß ein Entlüfterohr (22) in Strömungsverbindung mit der Unterseite der Haube (4) vorgesehen ist.

11. Einrichtung nach einem der Ansprüche 7 bis 10, weiter dadurch gekennzeichnet, daß eine zweite Leitung (18) vorgesehen ist, die mit einem Ende in Strömungsverbindung mit dem zweiten Kanal (16) steht und mit dem anderen Ende in Strömungsverbindung mit der ersten Leitung stromab der Haube (4) steht.

12. Einrichtung nach einem der Ansprüche 7 bis 11, weiter dadurch gekennzeichnet, daß eine PSA-Anlage (40) zum Trennen von Sauerstoff von Luft vorgesehen ist, wobei die PSA-Anlage (40) mit ihrem Speiseende mit dem Inneren der Haube (4) in Verbindung steht.

13. Einrichtung nach einem der Ansprüche 7 bis 12, wobei die gasdichte Haube einen oberen Teil (6) aufweist, von welchem eine Schürze (8) nach unten verläuft.

## Revendications

1. Procédé de dissolution d'un gaz dans un liquide, caractérisé par les étapes :
a) de passage du liquide en dessous et dans une hotte étanche aux gaz,
b) de production d'une descente du liquide sous la forme d'un courant depuis en dessous de la hotte étanche aux gaz à travers une première voie de passage,
c) de passage de bulles du gaz vers le haut à travers le courant de liquide descendant pour les dissoudre dans le courant de liquide en vue de former un courant de gaz-liquide,
d) de production d'une ascension du courant de gaz-liquide à travers une seconde voie de passage, et
e) de passage supplémentaire de bulles de gaz vers le haut à travers le courant de gaz-liquide ascendant pour dissoudre davantage de gaz dans le courant de gaz-liquide et équilibrer la densité de liquide dans les courants descendant et ascendant.

2. Procédé suivant la revendication 1, caractérisé en ce que la première voie de passage est délimitée par l'espace annulaire entre la surface interne d'un premier tuyau extérieur et la surface externe d'un second tuyau intérieur et en ce que la seconde voie de passage est délimitée par la surface interne du second tuyau intérieur, les tuyaux faisant saillie vers le bas à partir de la hotte étanche aux gaz.

3. Procédé suivant l'une des revendications 1 et 2, caractérisé en ce que tout gaz non dissous est emprisonné à l'intérieur de la hotte.

4. Procédé suivant la revendication 3, caractérisé en ce que du gaz non dissous est, au moyen d'une pompe, recyclé pour le dissoudre à nouveau dans le liquide.

5. Procédé suivant l'une quelconque des revendications 1 à 4, caractérisé en ce que le gaz est un mélange gazeux enrichi en oxygène.

6. Procédé suivant la revendication 5, caractérisé en ce que le mélange gazeux enrichi en oxygène non dissous est retiré de la hotte et en ce que de l'oxygène en est séparé.

7. Appareil pour dissoudre un gaz dans un liquide, caractérisé par la prévision d'un premier conduit (2) pour le passage du liquide, une partie d'au moins le premier conduit (2) s'étendant en dessous et dans une hotte étanche aux gaz (4), de première et seconde voies de passage (14, 16) descendant depuis en dessous de la hotte étanche aux gaz, et de moyens (21, 23) situés aux extrémités inférieures des voies de passage (14,16) ou près de celles-ci pour introduire du gaz à la fois dans les première et seconde voies de passage (14, 16), l'agencement étant tel que du liquide passant le long des voies de passage en succession est mis en contact avec le gaz de façon à former dans les voies de passage des courants de gaz-liquide de densité équilibrée.

8. Appareil suivant la revendication 7, caractérisé en ce que la première voie de passage (14) est formée par un espace annulaire entre la surface interne d'un premier tuyau extérieur (10) et la surface externe d'un second tuyau intérieur (12), la seconde voie de passage (16) étant délimitée par la surface interne du second tuyau intérieur (12), les tuyaux (10, 12) faisant saillie vers le bas à partir d'en dessous de la hotte étanche aux gaz (4).

9. Appareil suivant l'une des revendications 7 et 8, caractérisé en ce qu'une pompe (24) est prévue pour remettre en circulation du gaz non dissous, emprisonné sous la hotte étanche aux gaz (4).

10. Appareil suivant l'une des revendications 7, 8 et 9, caractérisé en ce qu'un conduit d'évent (22) est prévu de façon à former une communication pour fluide avec le côté inférieur de la hotte (4).

11. Appareil suivant l'une quelconque des revendications 7 à 10, caractérisé en ce qu'un second conduit (18) est prévu qui présente à une extrémité une communication pour fluide avec la seconde voie de passage (16) et à son autre extrémité une communication pour fluide avec le premier conduit en aval de la hotte (4).

12. Appareil suivant l'une quelconque des revendications 7 à 11, caractérisé par la prévision d'une installation de PSA (40) pour séparer de l'oxygène à partir d'air, cette installation de PSA (40) communiquant à son extrémité d'alimentation avec l'intérieur de la hotte (4).

13. Appareil suivant l'une quelconque des revendications 7 à 12, caractérisé en ce que la hotte étanche aux gaz comprend une partie supérieure (6) à partir de laquelle pend une jupe (8).
